# EUROPEAN PATENT APPLICATION

(11) **EP 1 852 584 A1**
(43) Date of publication of application: **07.11.2007**
(21) Application number: 07251807.9
(22) Date of filing: 30.04.2007
(51) Int. Cl.: F01N 3/28, F01N 3/34

(54) **Exhaust device and vehicle provided with an exhaust device**

(30) Priority: 01.05.2006 JP 2006127212
(71) Applicant: Yamaha Hatsudoki Kabushiki Kaisha, Iwata-shi, Shizuoka 438-8501 (JP)
(72) Inventor: Nishimura, Hidehiro, Iwata-shi Shizuoka-ken 438-8501 (JP); Suzuki, Hiromi, Iwata-shi Shizuoka-ken 438-8501 (JP); Shimoishi, Manabu, Iwata-shi Shizuoka-ken 438-8501 (JP)
(74) Representative: Lamb, Martin John Carstairs

(57) **Abstract**

An exhaust device comprises an exhaust pipe (14, 21, 22a, 28, 29, 30) and a muffler (15) disposed around a portion of the exhaust pipe (14, 21, 22a, 28, 29, 30), wherein a first purification member (30) is positioned within the muffler (15). An air supply pipe (31) is connected to a section of the exhaust pipe (14, 21, 22a, 28, 29, 30) disposed inside the muffler (15), wherein the section of the exhaust pipe (14, 21, 22a, 28, 29, 30) to which the air supply pipe (31) is connected defines a liner axis.

## Description

### FIELD OF THE INVENTION

The present invention relates to an exhaust device and a vehicle provided with the exhaust device, and more particularly relates to an exhaust device including an exhaust pipe and a muffler, and a vehicle provided with the exhaust device.

### BACKGROUND TO THE INVENTION

Exhaust devices are known that include an exhaust pipe and a muffler, such as is described in TW 237089. The above-mentioned Patent reference discloses an exhaust device that includes an exhaust pipe, a muffler connected to the exhaust pipe, and an air supply pipe that is connected to the exhaust pipe and that supplies air to the exhaust pipe. In this known exhaust device, an upstream side purification member and a downstream side purification member are provided in the exhaust pipe. A section between the upstream side purification member and the downstream side purification member is formed to have a U-shape that bends with a 180 degree angle. As a result, the flow direction of the exhaust gas that has passed through the upstream side purification member and the flow direction of the exhaust gas that has passed through the downstream side purification member are opposite. In addition, a connection port of the air supply pipe is attached at a section of the U-shaped bent section between the upstream side purification member and the downstream side purification member of the exhaust pipe where the axis line of the U-shaped bent section is curved to the inside. More specifically, the air supply pipe is attached to the exhaust pipe such that the connection port of the air supply pipe can be seen from the upstream side of the exhaust pipe.

However, in the exhaust device disclosed in the above-described prior art reference, the air supply pipe is attached to the exhaust pipe such that the connection port of the air supply pipe can be seen from the upstream side of the exhaust pipe. As a result, when exhaust gas passes through the exhaust pipe from the upstream side to the downstream side thereof, the exhaust gas is liable to flow into the connection port of the air supply pipe. Accordingly, negative pressure is not liable to be generated in the connection port of the air supply pipe, which makes it more difficult to supply air from the air supply pipe to the exhaust pipe.

The present invention has been devised in light of the above-described and other problems, and it is an object thereof to provide an exhaust device that can inhibit hindrance of the supply of air from the air supply pipe to the exhaust pipe, and a vehicle provided with the exhaust device.

### SUMMARY OF THE INVENTION

According to a first aspect of the present invention there is provided an exhaust device comprising:
an exhaust pipe;
a muffler disposed around a portion of the exhaust pipe;
a first purification member positioned within the muffler; and
an air supply pipe connected to a section of the exhaust pipe disposed inside the muffler, wherein the section of the exhaust pipe to which the air supply pipe is connected defines a liner axis.

It should be understood that the term linear as used herein means that the item to which reference is being made is straight, i.e., is not curved.

A downstream end section of the exhaust pipe may be disposed inside the muffler.

The first purification member may be disposed downstream of the section of the exhaust pipe where the air supply pipe is connected.

The first purification member may form part of the exhaust pipe.

An exhaust device according to a second aspect of the invention includes: an exhaust pipe having one end connected to an engine; a muffler in which at least one section of the other end side of the exhaust pipe is disposed; and an air supply pipe that supplies air to the exhaust pipe and that is connected to the section of the exhaust pipe disposed inside of the muffler. In this exhaust device of the second aspect, an axis line of, at the least, the section of the exhaust pipe where the air supply pipe is connected is linear, a downstream side end section of the exhaust pipe is disposed inside the muffler, and a first purification member for purifying exhaust gas is disposed inside the downstream side end section of the exhaust pipe.

In the exhaust device according to the first and second aspects, as described above, as a result of the axis line of, at the least, the section of the exhaust pipe connected to the air supply pipe being linear, it is possible to prevent the air supply pipe from being attached to the exhaust pipe such that a connection port of the air supply pipe can be seen when looking from the upstream side of the exhaust pipe. As a result, when exhaust gas passes from the upstream side to the downstream side inside the exhaust pipe, the exhaust gas is inhibited from flowing into the connection port of the air supply pipe. Accordingly, when the exhaust gas passes from the upstream side to the downstream side within the exhaust pipe, negative pressure is liable to be generated in the connection port of the air supply pipe, whereby air is more easily able to flow from the air supply pipe to the exhaust pipe. As a result, it is possible to inhibit hindrance of the supply of air from the air supply pipe to the exhaust pipe.

In the exhaust device according to the above-described first and second aspects, it is favorable that an axis line of a section of the exhaust pipe between the section where the air supply pipe is connected and the first purification member is linear. If this structure is adopted, as compared to a structure in which the axis line of the section between the section of the exhaust pipe where the air supply pipe is connected and the first purification member is curved, the flow rate of the exhaust gas in the section between the section of the exhaust pipe where the air supply pipe is connected and the first purification member is inhibited from reducing. As a result, exhaust gas pressure inside the section between the section of the exhaust pipe where the air supply pipe is connected and the first purification member is inhibited from increasing. Accordingly, it is possible to inhibit hindrance of the supply of air from the air supply pipe to the exhaust pipe.

In the exhaust device according to the above-described first and second aspects, it is favorable that a second purification member for purifying exhaust gas is provided to the upstream side of the section of the exhaust pipe where the air supply pipe is connected. If this structure is adopted, exhaust gas is purified by the first purification member and the second purification member, whereby the purification capability of exhaust device is improved.

In the above-described exhaust device including the second purification member for purifying exhaust gas to the upstream side in the exhaust pipe from the section where the air supply pipe is connected, it is favorable that the first purification member and the second purification member include a catalyst that functions to purify exhaust gas. If this structure is adopted, the first purification member and the second purification member can purify the exhaust gas efficiently.

In the above-described exhaust device including the second purification member for purifying exhaust gas to the upstream side in the exhaust pipe from the section where the air supply pipe is connected, it is favorable that an axis line of a section of the exhaust pipe between the first purification member and the second purification member is linear. If this structure is adopted, as compared to a structure in which the axis line of the section between the first purification member and the second purification member is curved, the flow rate of the exhaust gas in the section of the exhaust pipe between the first purification member and the second purification member is inhibited from reducing. As a result, exhaust gas pressure inside the section of the exhaust pipe between the first purification member and the second purification member is inhibited from increasing. Accordingly, it is possible to inhibit hindrance of the supply of air from the air supply pipe to the exhaust pipe.

In the above-described exhaust device including the second purification member for purifying exhaust gas to the upstream side in the exhaust pipe from the section where the air supply pipe is connected, it is favorable that the second purification member is disposed inside the muffler. If this structure is adopted, it is possible to inhibit the second purification member from being cooled by the outside atmosphere, whereby it is possible to reduce the time required to raise the temperature of the second purification member to the temperature at which the exhaust gas is purified (the activation temperature).

In the above-described exhaust device in which the second purification member is disposed inside the muffler, it is favorable that the second purification member is disposed in the vicinity of an upstream side end section of the exhaust pipe among sections of the exhaust pipe that are positioned within the muffler. If this structure is adopted, the second purification member is disposed close to the engine. Accordingly, exhaust gas with a higher temperature is able to flow into the second purification member, whereby it is possible to reduce the time required to raise the temperature of the second purification member to the temperature at which the exhaust gas is purified (the activation temperature).

The second purification member may form part of the exhaust pipe.

In the above-described exhaust device in which the second purification member is disposed inside the muffler, it is favorable that the first purification member and the second purification member are disposed at a determined distance apart from each other in the longitudinal direction of the muffler. If this structure is adopted, the first purification member and the second purification member are not disposed in a row in the direction (the lateral direction) that crosses the longitudinal direction of the muffler. Accordingly, the muffler does not need to be made larger in the direction (the lateral direction) that crosses the longitudinal direction of the muffler.

In the exhaust device according to the above-described first and second aspects, it is favorable that a separation wall is provided that separates the inside of the muffler into a plurality of regions, and that a connection pipe is provided in the separation wall that connects two of the regions separated by the separation wall. In this exhaust device, the downstream side end section of the exhaust pipe and the connection pipe are arranged so as to overlap with each other in the longitudinal direction of the muffler. If this structure is adopted, the downstream side end section of the exhaust pipe is disposed away from the air supply pipe in the longitudinal direction of the muffler. Accordingly, heat generated by purification of the exhaust gas by the first purification member provided in the downstream side end section of the exhaust pipe is inhibited from being transmitted to the section of the exhaust pipe where the air supply pipe is connected. As a result, the pressure of the air at the section of the exhaust pipe where the air supply pipe is connected is inhibited from being increased by heat generated by the first purification member. Therefore, hindrance of the flow of air from the air supply pipe into the exhaust pipe is inhibited even more effectively. Moreover, as a result of arranging the downstream side end section of the exhaust pipe and the connection pipe such that they overlap in the longitudinal direction of the muffler, sound generated by expansion of exhaust gas, when the exhaust gas that has passed through the downstream side end section of the exhaust pipe expands in one of the regions separated by the separation wall, is inhibited from directly entering the connection pipe. As a result, it is possible to inhibit sound generated by expansion of the exhaust gas from being transmitted to a neighboring region separated off by the separation wall.

A vehicle according to a third aspect of the invention is provided with the exhaust device according to either the first or second aspects set out above. As a result of adopting this structure, it is possible to provide a vehicle provided with an exhaust device that inhibits hindrance of supply of air from an air supply pipe to an exhaust pipe.

### BRIEF DESCRIPTION OF THE DRAWINGS

These and other aspects of the present invention will now be described, by way of example only, with reference to the accompanying drawings, in which:
Fig. 1 is a side view showing the overall structure of a motorcycle according to an embodiment of the invention;
Fig. 2 is a cross sectional view that shows in more detail the structure of a muffler of the motorcycle according to the embodiment shown in Fig. 1;
Fig. 3 is a cross sectional view along line 100-100 of Fig. 2;
Fig. 4 is a cross sectional view along line 200-200 of Fig. 2;
Fig. 5 is a cross sectional view along line 300-300 of Fig. 2;
Fig. 6 is a cross sectional view showing the structure of an area surrounding a ring shaped member of the motorcycle according to the embodiment shown in Fig. 1; and
Fig. 7 is a front view showing the structure of the ring shaped member of the motorcycle according to the embodiment shown in Fig. 1.

### DETAILED SESCRIPTION OF THE DRAWINGS

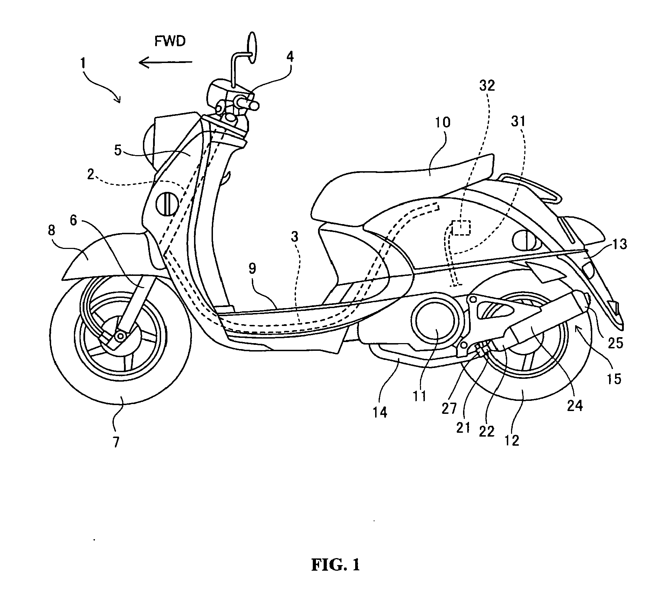

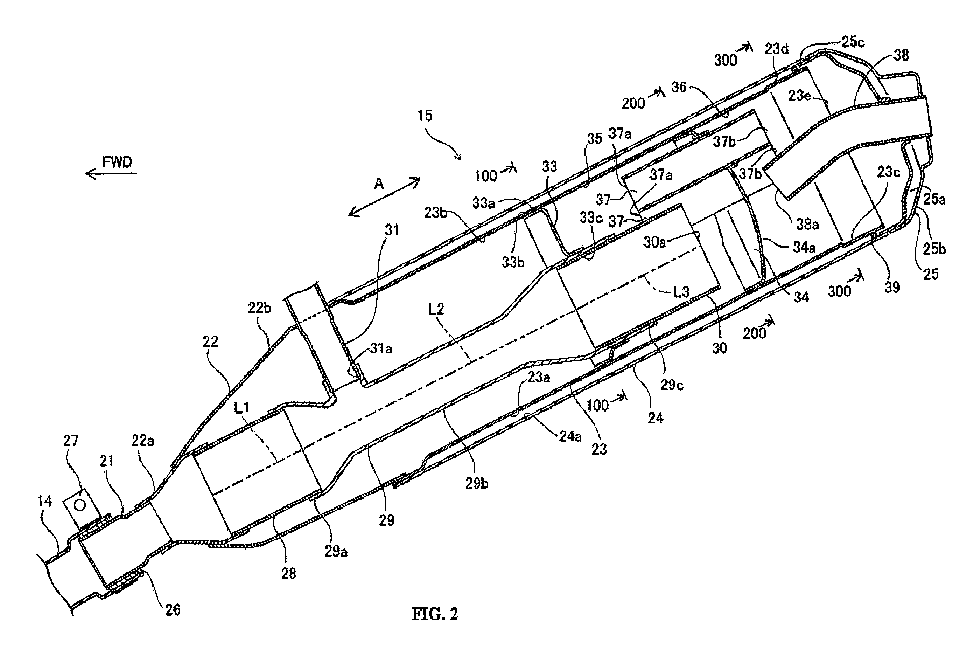

Fig. 1 is a side view showing the overall structure of a motorcycle according to an embodiment of the invention. Fig. 2 to Fig. 7 are figures that explain in detail the structure of a muffler of the motorcycle according to the embodiment shown in Fig. 1. Note that, the present embodiment describes a scooter-type motorcycle as one example of a vehicle of the invention. In the figures, FWD indicates the forward direction in the traveling direction of the motorcycle. Hereinafter, the structure of a motorcycle 1 according to the embodiment of the invention will be described in detail with reference to Fig. 1 to Fig. 7.

In the motorcycle 1 according to the embodiment of the invention, a main frame 3 is fixed to a lower side of a head pipe 2 as shown in Fig. 1. The main frame 3 is formed to extend from the lower side to the rear. The head pipe 2 and the main frame 3 structure or define a body frame.

In addition, a handle 4 is attached to an upper section of the head pipe 2 such that the handle 4 can be turned. Moreover, a front cowl 5 is provided at the front side of the head pipe 2 so as to cover the front side of the head pipe 2. Furthermore, a pair of front forks 6 that include suspension to absorb impact in the up-down direction are disposed beneath the head pipe 2. A front wheel 7 is rotatably attached to lower ends of the pair of front forks 6. In addition, a front fender 8 is disposed above the front wheel 7.

In addition, a foot rest 9 is disposed to the upper side of a central section of the main frame 3. Furthermore, a seat 10 is disposed to the upper side of a rear section of the main frame 3. Moreover, an engine 11 is disposed beneath the rear section of the main frame 3. In addition, a rear wheel 12 is rotatably disposed to the rear side of the engine 11. Furthermore, a rear fender 13 is attached above the rear wheel 12 so as to cover above the rear wheel 12. In addition, one end of an external exhaust pipe 14 is connected to the engine 11. The external exhaust pipe 14 faces toward the rear and is connected to a muffler 15. Note that, the muffler 15 is one example of a "muffler" of the invention.

The muffler 15, as can be seen in Fig. 2, is configured from a connecting pipe 21 that is connected to the external exhaust pipe 14; a front side cap member 22 that is made of stainless steel and that is connected to a rear section of the connecting pipe 21; an inner tubular member 23 that is made of stainless steel and that is welded to a rear section of the front side cap member 22; an outer tubular member 24, which is welded together with the inner tubular member 23 at the rear section of the front side cap member 22 and which is made of stainless steel, the outer tubular member 24 including an inner periphery surface 24a disposed to extend along an outer periphery surface 23a of the inner tubular member 23; and a rear side cap member 25 that is made of stainless steel and that is welded to a rear section of the outer tubular member 24. More specifically, a front section of the inner tubular member 23 is fixed to the front side cap member 22 and the outer tubular member 24, while the rear section of the inner tubular member 23 is not fixed to the outer tubular member 24.

The connecting pipe 21 is connected to the external exhaust pipe 14 by a fixing member 27 with a seal 26 interposed therebetween. In addition, the front side cap member 22 includes a front member 22a connected to the rear section of the connecting pipe 21, and a front side cap body member 22b that is fixed to the front member 22a. In addition, an upstream purification tube member 28 formed by a catalyst that functions to purify exhaust gas is attached to a rear end section of the front member 22a. Note that, the upstream purification tube member 28 is disposed in the vicinity of an upstream side end section among the sections of the exhaust pipe disposed inside the muffler 15, as described hereinafter. Furthermore, an air flow pipe 29 having an upstream end large diameter section 29a, a central smaller diameter section 29b, and a downstream end large diameter section 29c is connected to the rear section of the upstream purification tube member 28. In addition, a downstream purification tube member 30 formed from a catalyst that functions to purify exhaust gas is connected to the rear section of the downstream end large diameter section 29c of the air flow pipe 29. More specifically, the purification tube members 28 and 30 are disposed to be a determined distance apart from each other in the longitudinal direction (direction A) of the muffler 15. The upstream purification tube member 28, the air flow pipe 29 and the downstream purification tube member 30 configure a "purifier". Note that, at temperatures equal to or more than a determined temperature (an activation temperature) the purifier functions to oxidize HC (hydrocarbon) and CO (carbon monoxide) that remain after combustion of the fuel into H₂O (water) and CO₂ (carbon dioxide), and reduce NOₓ (nitrogen oxides).

It should be noted that the terms "upstream" and "downstream" are referenced in relation to the normal direction of flow of exhaust gases, i.e., towards the rear of the vehicle.

In addition, the external exhaust pipe 14, the connecting pipe 21, the front member 22a of the front side cap member 22, the upstream purification tube member 28, the air flow pipe 29, and the downstream purification tube member 30 configure an "exhaust pipe" of the invention. That is, in this embodiment, the downstream purification tube member 30 is provided in the downstream side end section of the exhaust pipe, and the downstream side end section (the purification tube member 30) of the exhaust pipe is disposed within the muffler 15. Note that, the upstream purification tube member 28 is one example of a "second purification member" of the invention, and the downstream purification tube member 30 is one example of a "first purification member" of the invention.

In addition, in the embodiment, an axis line L1 of the upstream purification tube member 28, an axis line L2 of the air flow pipe 29, and an axis line L3 of the downstream purification tube member 30 are respectively linear. Furthermore, these three axes lines L1 to L3 are positioned to define a straight line.

In addition, one end of a secondary air induction pipe 31 for introducing secondary air is connected to the small diameter central section 29b of the air flow pipe 29. In this embodiment, the axis line (L2) of the central section (the small diameter section 29b) of the air flow pipe 29 (the exhaust pipe) connected to the secondary air induction pipe 31 is linear. Accordingly, it is possible to prevent the secondary air induction pipe 31 from being attached to the air flow pipe 29 (the exhaust pipe) such that a connection port 31a of the secondary air induction pipe 31 can be seen when looking from the upstream side of the exhaust pipe. Note that, the secondary air induction pipe 31 is one example of an "air supply pipe" of the invention. In addition, taking into consideration the fact that a reduced level of oxygen is supplied to the downstream purification tube member 30 on the rear side as a result of oxygen being consumed in the upstream purification tube member 28 as a result of oxidation that occurs in said upstream purification tube member 28, the secondary air induction pipe 31 is provided to make sure that ample oxygen (air) is supplied to the downstream purification tube member 30.

In addition, the secondary air induction pipe 31 is formed to extend to the outside of the muffler 15 via the connection section of the front side cap member 22, the inner tubular member 23 and the outer tubular member 24. Moreover, as can be seen in Fig. 1, a reed valve housing member 32 that houses a reed valve (a check valve), not shown, is attached to the other end of the secondary air induction pipe 31. In addition, the exhaust pipe, the muffler 15, the secondary air induction pipe 31, and the reed valve housing member 32 configure the exhaust device.

Furthermore, as can be seen in Fig. 2, a support member 33 that supports the air flow pipe 29 is attached to the downstream large diameter section 29c of the air flow pipe 29. The support member 33 includes a short tubular member 33a that extends a short distance in the axial direction (direction A) of the inner tubular member 23. An outer periphery surface 33b of this short tubular member 33a is moveably positioned in line with the inner periphery surface 23b of the inner tubular member 23. In addition, when the purifier reaches a high temperature, a rear section (the large diameter section 29c of the air flow pipe 29) of the purifier moves rearward in direction A, and along with this the rear section of the inner tubular member 23 moves rearward in direction A. At this time, the outer periphery surface 33b of the short tubular member 33a of the support member 33 moves just slightly along the inner periphery surface 23b of the inner tubular member 23.

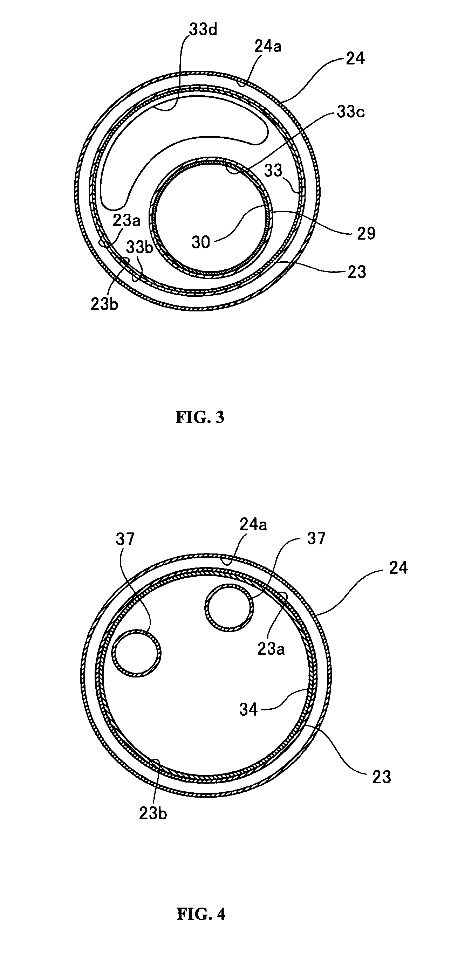

Furthermore, as shown in Fig. 3, an opening 33d and an insertion hole 33c in which the air flow pipe 29 is inserted are formed in the support member 33. More specifically, a space that is located to the front side of the support member 33 of the inner tubular member 23 and a space that is located to the rear side of the support member 33 are connected via the opening 33d.

Moreover, as can be seen in Fig. 2, a partition 34 that is fixed to the inner periphery surface 23b of the inner tubular member 23 is disposed to the rear of the downstream purification tube member 30. Furthermore, the front side cap member 22, the inner tubular member 23 and the partition 34 structure a first expansion chamber 35. In addition, the partition 34, the inner tubular member 23 and the rear side cap member 25 structure a second expansion chamber 36. More specifically, the partition 34 functions to separate the inside of the muffler 15 into two regions. Note that, the partition 34 is one example of a "separation wall" of the invention.

Furthermore, a wall 34a formed as a spherical surface is provided in the partition 34. Forming the wall 34a with a spherical surface shape makes it possible to increase the strength of the wall 34a. As a result, even if high pressure exhaust gas that has passed through the downstream purification tube member 30 (the purifier) and flown into the first expansion chamber 35 expands and generates a large sound, the wall 34a is able to inhibit vibration. As a result, the sound generated by expansion of the exhaust gas is inhibited from being transmitted to the second expansion chamber 36.

In addition, as shown in Fig. 2 and Fig. 4, two connection pipes 37 are attached to the partition 34. Note that, the connection pipes 37 are one example of a "connection pipe" of the invention. The connection pipes 37, as shown in Fig. 2, function to connect the first expansion chamber 35 and the second expansion chamber 36, and to allow exhaust gas to pass from the first expansion chamber 35 to the second expansion chamber 36. Furthermore, the connection pipes 37 and the downstream side end section (the downstream purification tube member 30) of the exhaust pipe are disposed so as to overlap with each other in the longitudinal direction (direction A) of the muffler 15. More specifically, a front side opening surface 37a of the connection pipes 37 is disposed further to the front side in the axial direction (direction A) of the inner tubular member 23 than a rear side opening surface 30a of the downstream purification tube member 30. As a result, the large noise generated when exhaust gas that has passed through the downstream purification tube member 30 expands is inhibited from directly entering into the connection pipes 37, whereby the sounds generated by expansion of the exhaust gas is inhibited from being transmitted to the second expansion chamber 36.

Furthermore, an discharge pipe 38 for exhausting exhaust gas that passes through the connection pipes 37 to the outside of the muffler 15 is provided in the rear side cap member 25. A front side opening surface 38a of the discharge pipe 38 is disposed further to the front side in the axial direction (direction A) of the inner tubular member 23 than the rear side opening surface 37b of the connection pipes 37. As a result, the noise generated by expansion of exhaust gas that has passed through the connection pipes 37 is inhibited from directly entering into the discharge pipe 38.

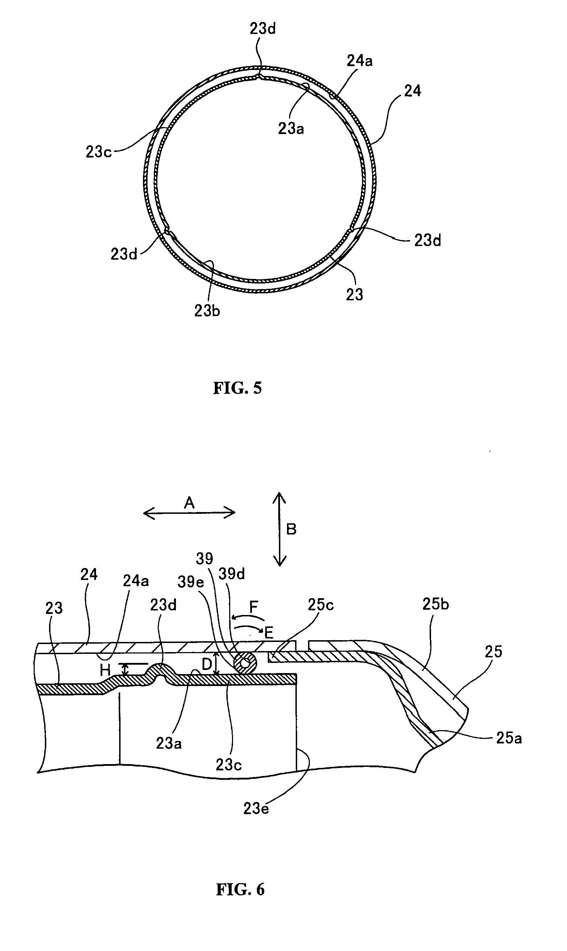

In addition, the discharge pipe 38 is welded to a support member 25a of the rear side cap member 25. Further, a rear side cap body member 25b, which the support member 25a can be attached to, is included in the rear side cap member 25. Moreover, as shown in Fig. 6, a rear end section of the outer tubular member 24 and the rear side cap body member 25b are welded and fixed to the support member 25a of the rear side cap member 25.

Moreover, a ring shaped member 39 is disposed between the outer periphery surface 23a of the inner tubular member 23 and the inner periphery surface 24a of the outer tubular member 24. The ring shaped member 39, as shown in Fig. 2 and Fig. 6, is disposed above the outer periphery surface 23a of a rear end section 23c of the inner tubular member 23. Furthermore, as shown in Fig. 5 and Fig. 6, three protrusions 23d having a protrusion height H (refer to Fig. 6) that is smaller than an outer diameter D (refer to Fig. 6) of the ring shaped member 39 are formed in a section of the outer periphery surface 23a of the rear end section 23c at positions that are further to the front side in the axial direction of the inner tubular member 23 and the outer tubular member 24 (direction A in Fig. 6) than the ring shaped member 39. The protrusions 23d are formed in an integrated manner at 120 degrees of separation from each other. As a result, the ring shaped member 39 is inhibited from moving further to the front side than the protrusions 23d of the inner tubular member 23.

In addition, as shown in Fig. 6, a front end section 25c of the rear side cap member 25 is disposed to the rear side of the ring shaped member 39 in the axial direction (direction A) of the inner tubular member 23 and the outer tubular member 24, and at a section that is further to the front side than a rear side opening surface 23e of the inner tubular member 23. As a result, it is possible to inhibit the ring shaped member 39 from moving further to the rear than the front end section 25c of the rear side cap member 25, whereby it is possible to inhibit the ring shaped member 39 from displacing to the rear side of the outer periphery surface 23a of the rear end section 23c of the inner tubular member 23.

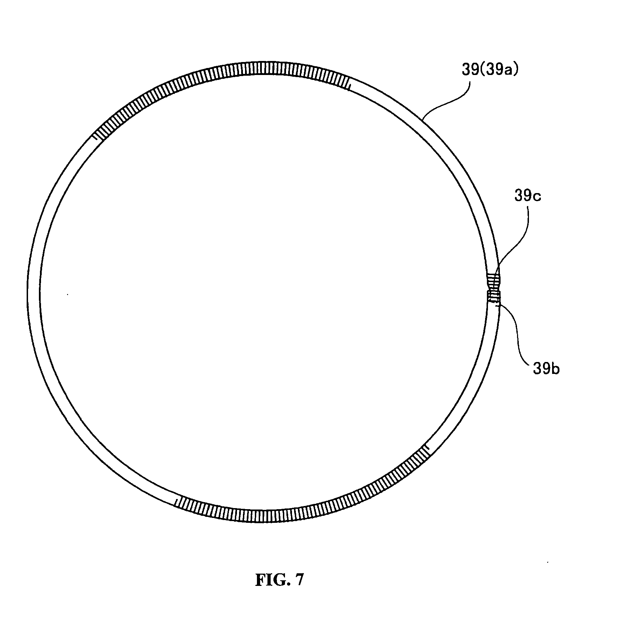

Furthermore, the ring shaped member 39, as shown in Fig. 7, is formed by shaping a coil member 39a into a ring shape. The coil member 39a is made from an extension coil spring formed by winding a metal wire into a coil shape. More specifically, the coil member 39a includes one end 39b and another end 39c having a cross section that is substantially hollow. As a result of forming the ring shaped member 39 (the coil member 39a) to have a hollow cross section in this manner, the ring shaped member 39 can be elastically deformed in the direction that is perpendicular to the outer periphery surface 23a of the inner tubular member 23 and the inner periphery surface 24a of the outer tubular member 24 (direction B shown in Fig. 6) between the outer periphery surface 23a of the inner tubular member 23 (refer to Fig. 6) and the inner periphery surface 24a of the outer tubular member 24 (refer to Fig. 6).

Furthermore, the one end 39b of the coil member 39a has an external diameter that is the same as the external diameter of a section positioned between the one end 39b and the other end 39c of the coil member 39a. The other end 39c of the coil member 39a has an external diameter that is smaller than the one end 39b. More specifically, the coil member 39a is an extension coil spring that has substantially the same external diameter in which just one end (the other end 39c) has been formed with a smaller external diameter. Furthermore, the other end 39c of the coil member 39a has an external diameter that is the same as, or slightly larger than, the internal diameter of the one end 39b.

Moreover, as shown in Fig. 6, an outer periphery section 39e of the ring shaped member 39, which has a substantially hollow cross section, is generally ring shaped. As a result, when the rear end section 23c of the inner tubular member 23 has moved to the rear side cap member 25 side (the rear side) as a result of the inner tubular member 23 expanding at high temperatures, the ring shaped member 39 can move while rotating in direction E or direction F with respect to the outer periphery surface 23a of the inner tubular member 23 and the inner periphery surface 24a of the outer tubular member 24.

In this embodiment, as described above, as a result of the axis line of the section of the air flow pipe 29 (the exhaust pipe) connected to the secondary air induction pipe 31 being a straight line, it is possible to prevent the secondary air induction pipe 31 from being attached to the exhaust pipe (the air flow pipe 29) such that the connection port 31a of the secondary air induction pipe 31 can be seen when looking from the upstream side of the exhaust pipe. As a result, when exhaust gas passes from the upstream side to the downstream side inside the exhaust pipe (the air flow pipe 29), the exhaust gas is inhibited from flowing into the connection port 31a of the secondary air induction pipe 31. Accordingly, when the exhaust gas passes from the upstream side to the downstream side within the exhaust pipe, negative pressure is liable to be generated in the connection port 31a of the secondary air induction pipe 31, whereby air is more easily able to flow from the secondary air induction pipe 31 to the exhaust pipe (the air flow pipe 29). As a result, it is possible to inhibit hindrance of the supply of air from the secondary air induction pipe 31 to the exhaust pipe (the air flow pipe 29).

Furthermore, in this embodiment, the upstream purification tube member 28 for purifying exhaust gas is provided to the upstream side of the section of the exhaust pipe where the secondary air induction pipe 31 is connected, and the downstream purification tube member 30 is provided in the downstream side end section of the exhaust pipe. As a result, the exhaust gas can be purified by the purification tube members 28 and 30, whereby the purification capability of the exhaust device is improved.

Furthermore, the axis line L1 of the upstream purification tube member 28, the axis line L2 of the air flow pipe 29, and the axis line L3 of the downstream purification tube member 30 are arranged in a linear manner. Accordingly, as compared to a structure in which the axis line L1 of the upstream purification tube member 28, the axis line L2 of the air flow pipe 29, and the axis line L3 of the downstream purification tube member 30 are arranged in a curved manner, the flow rate of the exhaust gas inside the upstream purification tube member 28, the air flow pipe 29 and the downstream purification tube member 30 of the exhaust pipe is inhibited from reducing. As a result, exhaust gas pressure inside the upstream purification tube member 28, the air flow pipe 29 and the downstream purification tube member 30 of the exhaust pipe is inhibited from increasing. Accordingly, it is possible to inhibit hindrance of the supply of air from the secondary air induction pipe 31 to the exhaust pipe (the air flow pipe 29).

Moreover, in this embodiment, the upstream purification tube member 28 is disposed inside the muffler 15. As a result, it is possible to inhibit the upstream purification tube member 28 from being cooled by the outside atmosphere, whereby it is possible to reduce the time required to raise the temperature of the upstream purification tube member 28 to the temperature at which the exhaust gas is purified (the activation temperature).

Furthermore, in this embodiment, the upstream purification tube member 28 is disposed in the vicinity of the upstream side end section among the sections of the exhaust pipe disposed within the muffler 15. As a result, the upstream purification tube member 28 is disposed close to the engine 11. Accordingly, exhaust gas with a higher temperature is able to flow into the upstream purification tube member 28, whereby it is possible to reduce the time required to raise the temperature of the upstream purification tube member 28 to the temperature at which the exhaust gas is purified (the activation temperature).

In addition, in this embodiment, the purification tube members 28 and 30 are disposed to be a determined distance apart from each other in the longitudinal direction (direction A) of the muffler 15. As a result, the purification tube members 28 and 30 are not disposed in a row in the direction (the lateral direction) that crosses the longitudinal direction of the muffler 15. Accordingly, the muffler 15 does not need to be made larger in the direction (the lateral direction) that crosses the longitudinal direction of the muffler 15.

Furthermore, in this embodiment, the downstream purification tube member 30 (the downstream side end section of the exhaust pipe) and the connection pipes 37 are arranged so as to overlap with each other in the longitudinal direction (direction A) of the muffler 15. As a result, the downstream purification tube member 30 (the downstream side end section of the exhaust pipe) is disposed away from the secondary air induction pipe 31 in the longitudinal direction of the muffler 15. Accordingly, heat generated by purification of the exhaust gas by the downstream purification tube member 30 is inhibited from being transmitted to the section of the air flow pipe 29 (the exhaust pipe) where the secondary air induction pipe 31 is connected. As a result, the pressure of the air at the section of the air flow pipe 29 (the exhaust pipe) where the secondary air induction pipe 31 is connected is inhibited from being increased by heat generated by the downstream purification tube member 30. Therefore, hindrance of the flow of air from the secondary air induction pipe 31 into the air flow pipe 29 (the exhaust pipe) is inhibited even more effectively. Moreover, as a result of arranging the downstream purification tube member 30 (the downstream side end section of the exhaust pipe) and the connection pipes 37 such that they overlap in the longitudinal direction of the muffler 15, sound generated by expansion of exhaust gas, when the exhaust gas that has passed through the downstream purification tube member 30 (the downstream side end section of the exhaust pipe) expands in the first expansion chamber 35, is inhibited from directly entering the connection pipes 37. As a result, it is possible to inhibit sound generated by expansion of the exhaust gas from being transmitted to the second expansion chamber 36.

Note that, in the embodiment disclosed here, all of the described features are examples, and thus are not intended to limit the invention. The scope of the invention is defined by the claims and not by the description of the above-described embodiment. In addition, the invention includes structures that are equivalent to the scope of the claims and all modifications that come within the scope of the claims.

For example, in the above-described embodiment, a motorcycle is described as one example of a vehicle provided with the exhaust device. However, the invention is not limited to this, and so long as a vehicle is provided with the exhaust device, the invention may be applied to other vehicles such as an automobile, a three-wheel vehicle, an ATV (All Terrain Vehicle) or the like.

In addition, the above-described embodiment describes an example in which the exhaust device is applied to a vehicle. However, the invention is not limited to this, and the exhaust device may be applied to devices other than those used in a vehicle, such as generators or the like.

Furthermore, the above-described embodiment explains an example in which the overall axis line of the air flow pipe with the connected secondary air induction pipe is arranged to be linear. However, the invention is not limited to this structure, and just the axis line of the section of the air flow pipe to which the secondary air induction pipe is connected may be arranged to be linear.

In addition, the above-described embodiment explains an example in which the axis lines (L1, L3) of the purification tube members and the axis line (L2) of the air flow pipe are arranged to be linear. However, the invention is not limited to this structure, and the axis lines (L1, L3) of the purification tube members and the axis line (L2) of the air flow pipe may be arranged in a non-linear manner. In this case, for example, the air flow pipe may be formed to have a bent back shape, and a structure may be adopted in which the flow direction of the exhaust gas that passes through the upstream side purification tube member and the flow direction of the exhaust gas that passes through the downstream side purification tube member are opposite to each other.

Furthermore, the above-described embodiment explains an example in which the purification tube members are respectively provided to the upstream side of the section of the exhaust pipe where the secondary air induction pipe is connected, and in the downstream side end section of the exhaust pipe. However, the invention is not limited to this, and a structure may be adopted in which no purification tube member is provided to the upstream side of the section of the exhaust pipe where the secondary air induction pipe is connected, and a purification tube member is just provided in the downstream side end section of the exhaust pipe.

Moreover, the above-described embodiment explains an example in which the purification tube member disposed to the upstream side in the exhaust pipe from the secondary air induction pipe is disposed inside the muffler. However, the invention is not limited to this structure, and the purification tube member disposed to the upstream side in the exhaust pipe from the secondary air induction pipe may be disposed outside of the muffler. In other words, the purification tube member may be provided in an external exhaust pipe.

In addition, the above-described embodiment explains an example in which a single partition member is provided to separate the inside of the muffler into two expansion chambers (the first expansion chamber and the second expansion chamber). However, the invention is not limited to this structure, and two or more partition members may be provided and the inside of the muffler may be separated into three or more expansion chambers.

Furthermore, the above-described embodiment explains an example in which the first expansion chamber is located to the front side of the second expansion chamber. However, the invention is not limited to this and the first expansion chamber may be located to the rear side of the second expansion chamber.

### Description of the Reference Numerals and Signs

- 1: Motorcycle (Vehicle)
- 11: Engine
- 14: External Exhaust Pipe (Exhaust Pipe)
- 15: Muffler (Muffler)
- 21: Connecting Pipe (Exhaust Pipe)
- 22a: Front Member (Exhaust Pipe)
- 28: Purification Tube Member (Second Purification Member Exhaust Pipe)
- 29: Air Flow Pipe (Exhaust Pipe)
- 30: Purification Tube Member (First Purification Member, Exhaust Pipe)
- 31: Secondary Air Induction Pipe (Air Supply Pipe)
- 34: Partition (Separation wall)
- 37: Connection Pipe (Connection Pipe)

## Claims

1. An exhaust device comprising:
an exhaust pipe (14, 21, 22a, 28, 29, 30);
a muffler (15) disposed around a portion of the exhaust pipe(14, 21, 22a, 28, 29, 30);
a first purification member (30) positioned within the muffler (15); and
an air supply pipe (31) connected to the section of the exhaust pipe(14, 21, 22a, 28, 29, 30) disposed inside of the muffler (15), wherein the section of the exhaust pipe(14, 21, 22a, 28, 29, 30) to which the air supply pipe (31) is connected is linear.

2. The exhaust device according to claim 1, wherein a downstream end section of the exhaust pipe (14, 21, 22a, 28, 29, 30) is disposed inside the muffler (15).

3. The exhaust device according to claim 1 or 2, wherein the first purification member (30) is disposed downstream of the section of the exhaust pipe(14, 21, 22a, 28, 29, 30) where the air supply pipe (31) is connected.

4. The exhaust device according to claim 1, 2 or 3, wherein an axis line of a section of the exhaust pipe(14, 21, 22a, 28, 29, 30) between the section where the air supply pipe (31) is connected and the first purification member (30) is linear.

5. The exhaust device according to any preceding claim, wherein the first purification member (30) forms part of the exhaust pipe(14, 21, 22a, 28, 29, 30).

6. The exhaust device according to any preceding claim, wherein a second purification member (28) is disposed upstream of the section of the exhaust pipe (14, 21, 22a, 28, 29, 30) where the air supply pipe (31) is connected.

7. The exhaust device according to claim 6, wherein an axis line of a section of the exhaust pipe (14, 21, 22a, 28, 29, 30) between the first purification member (30) and the second purification member (28) is linear.

8. The exhaust device according to claim 6 or 7, wherein the second purification member (28) is disposed inside the muffler (15).

9. The exhaust device according to claim 6, 7 or 8, wherein the second purification member (28) is disposed in the vicinity of an upstream side end section of the exhaust pipe (14, 21, 22a, 28, 29, 30) among sections of the exhaust pipe(14, 21, 22a, 28, 29, 30) that are positioned within the muffler (15).

10. The exhaust device according to any one of claims 6 to 9, wherein the second purification member (28) forms part of the exhaust pipe(14, 21, 22a, 28, 29, 30).

11. The exhaust device according to any one of claims 6 to 10, wherein the first and second purification members (30, 28) are disposed at a determined distance apart from each other in the longitudinal direction of the muffler (15).

12. The exhaust device according to any preceding claim, further comprising:
a separation wall (34) that separates the inside of the muffler (15) into a plurality of regions; and
a connection pipe (37) provided in the separation wall (34) and that connects two of the regions separated by the separation wall (34), wherein
the downstream side end section (30a) of the exhaust pipe(14, 21, 22a, 28, 29, 30) and the connection pipe (37) are arranged so as to overlap with each other in the longitudinal direction of the muffler (15).

13. The exhaust device according to any one of claims 6 to 12, wherein the first and second purification members (30, 28) comprise a catalyst that functions to purify exhaust gas.

14. An exhaust device including:
an exhaust pipe(14, 21, 22a, 28, 29, 30) having one end connected to an engine (11);
a muffler (15) in which at least one section of the other end side of the exhaust pipe(14, 21, 22a, 28, 29, 30) is disposed; and
an air supply pipe (31) that supplies air to the exhaust pipe(14, 21, 22a, 28, 29, 30) and that is connected to the section of the exhaust pipe (14, 21, 22a, 28, 29, 30) disposed inside of the muffler (15), wherein
an axis line of, at the least, the section of the exhaust pipe (14, 21, 22a, 28, 29, 30) where the air supply pipe (31) is connected is linear,
a downstream side end section of the exhaust pipe (14, 21, 22a, 28, 29, 30) is disposed inside the muffler (15), and
a first purification member (30) for purifying exhaust gas is disposed inside the downstream side end section of the exhaust pipe(14, 21, 22a, 28, 29, 30).

15. A vehicle (1) comprising an exhaust device according to any preceding claim.
